# EUROPÄISCHE PATENTSCHRIFT

(11) **EP 1 513 727 B1**
(45) Veröffentlichungstag und Bekanntmachung des Hinweises auf die Patenterteilung: **19.07.2006**
(21) Anmeldenummer: 03755912.7
(22) Anmeldetag: 26.05.2003
(51) Int. Cl.: B64F 1/30, B64F 1/32, B66F 9/10, B64F 5/00

(54) **HUB- UND TRANSPORTFAHRZEUG ZUM LASTENTRANSPORT IM FLUGHAFENBEREICH**
LIFT AND TRANSPORT VEHICLE FOR THE TRANSPORT OF LOADS IN AIRPORT AREAS
VEHICULE DE LEVAGE ET DE TRANSPORT POUR LE TRANSPORT DE CHARGES DANS DES ZONES AEROPORTUAIRES

(30) Priorität: 29.05.2002 DE 20208510 U; 10.12.2002 DE 10258474
(43) Veröffentlichungstag der Anmeldung: 16.03.2005
(73) Patentinhaber: CATCON AIRGROUND TECHNOLOGIES GMBH, 12107 Berlin (DE)
(72) Erfinder: HENNIG, Roland, 65428 Rüsselsheim (DE); WERTHEIM, Dieter, 10823 Berlin (DE)
(74) Vertreter: Ninnemann, Detlef
(86) Internationale Anmeldenummer: PCT/DE2003/001760
(87) Internationale Veröffentlichungsnummer: WO 2003/101832

(56) Entgegenhaltungen:
- EP-A- 0 324 083
- EP-A- 0 497 076
- WO-A-00/55041
- WO-A-02/28762
- GB-A- 2 113 175
- US-A- 2 931 681
- US-A- 5 092 012
- US-A- 5 112 183
- US-A- 5 746 396

## Beschreibung

Die Erfindung betrifft ein Hub- und Transportfahrzeug zum Lastentransport im Flughafenbereich gemäß dem Oberbegriff des Anspruchs 1, sowie eine Hubplattform, insbesondere für ein solches Hub- und Transportfahrzeug, gemäß dem Oberbegriff des Anspruchs 27.

Zum Be- und Entladen von Flugzeugen sind eine Vielzahl von Fahrzeugen bekannt. Üblich sind beispielsweise mit einer Scherenhubbühne ausgestattete Fahrzeuge, die sowohl zum Transport als auch zum Be- und Entladen von Flugzeugen mit Fracht, insbesondere von Frachtcontainern, vorgesehen sind.

Aus der US 4,176,732 ist ein Personenlift bekannt, der insbesondere zum Transport von Behinderten und alten Menschen geeignet ist. Dieser Lift besteht aus einem Frontgabelstapler und einer an diesem befestigten Kabine, die zur Aufnahme der zu transportierenden Menschen und eines zusätzlichen Bedieners dient.

Aus der US 5,499,694 ist ein weiterer Personenlift bekannt, bei dem auf einem Fahrgestell eine Hubvorrichtung vorgesehen ist, an der eine Plattform, beispielsweise eine Arbeitsplattform, befestigt ist. Die Arbeitsplattform lässt sich in ihrer Höhe verstellen, wobei sie den durch das Fahrwerk vorgezeichneten Rahmen nicht überschreitet.

Die WO00/55041 A, die alle Merkmale des Oberbegriffs des unabhängiges Anspruchs 1 offenbart, zeigt ein Fahrzeug für den Einsatz im Flughafenbereich. Dabei ist eine anhebbare Box 2 sowie eine Fahrerkabine 1 auf einer Scherenhubbühne 5 des Trägerfahrzeuges angeordnet. Über die Fahrerkabine 1 kann das Trägerfahrzeug gesteuert werden.

Aufgabe der vorliegenden Erfindung ist, eine fahrbare Vorrichtung zum Lastentransport im Flughafenbereich und ein dazu kompatibles, flexibles Transportmedium anzugeben, mit denen Nachteile des Standes der Technik vermieden werden.

Die Aufgabe wird durch ein Hub- und Transportfahrzeug zum Lastentransport im Flughafenbereich mit den Merkmalen des Anspruchs 1 gelöst. Die darauf rückbezogenen Unteransprüche geben vorteilhafte Ausführungen der Erfindung an.

Demgemäss weist ein Hub- und Transportfahrzeug eine an einem Trägerfahrzeug angeordnete Hubvorrichtung und eine mit der Hubvorrichtung verbundenen Hubplattform zur Aufnahme von Lasten, insbesondere von Personen, Frachtgut, Containern und/oder Cateringmaterial, auf. Die Hubplattform kann in zumindest einem Hubbereich der Hubvorrichtung in Fahrtrichtung links und/oder rechts neben dem Trägerfahrzeug abgesenkt und/oder angehoben werden.

In einer vorteilhaften Ausführung der Erfindung ist die Hubplattform lösbar mit der Hubvorrichtung verbunden. Es ist dabei von Vorteil, die Hubplattform über einen Schnellverschluss mit der Hubvorrichtung lösbar zu verbinden. Ein einfaches Auswechseln unterschiedlicher Hubplattform, die als Transportmedien dienen, ist so möglich. Es können daher Plattformen für unterschiedliche Aufgabenbereiche, insbesondere für den Personen- oder Frachttransport oder zur Flugzeugenteisung, mit dem gleichen Trägerfahrzeug verwendet werden, wodurch Kosten eingespart werden können.

Vorteilhaft ist eine Steuervorrichtung zur Steuerung des Trägerfahrzeugs und der Hubvorrichtung an der Hubplattform angeordnet. Die Steuervorrichtung kann über einen Schnellverschluss, insbesondere über eine Steckverbindung, mit dem Trägerfahrzeug koppelbar sein. Das Hub- und Transportfahrzeug kann durch die an der Hubplattform angebrachte Steuervorrichtung besonders günstig gesteuert werden, da der Fahrer die gesamten Abmessungen des Fahrzeugs überblicken kann und sich immer auf der Arbeitshöhe der Hubplattform befindet. Weiterhin ist ein direkter Kontakt mit den Passagieren möglich. Bei kombiniertem Fahr- und Hubbetrieb hat der Fahrer eine gute Übersicht über das zu steuernde Fahrzeug und das anzufahrende Flugzeug oder dessen Einstieg. Bei einem Wechsel der Hubplattform ist auch ein schneller Wechsel der Anschlüsse der Steuervorrichtung möglich.

In einer Weiterbildung der Erfindung ist das Trägerfahrzeug über eine Fernsteuerung steuerbar. Dabei ist es vorteilhaft, die Fernsteuerung über einen Schnellverschluss, insbesondere über eine Steckverbindung, mit Antriebs- und Steuereinrichtungen des Trägerfahrzeugs zu koppeln. Über die Fernsteuerung lässt sich das Trägerfahrzeug steuern, wenn die Hubplattform von dem Trägerfahrzeug abgenommen ist und daher auch eine auf der Hubplattform angeordnete Steuereinrichtung nicht mehr mit dem Trägerfahrzeug verbunden ist. Es lassen sich so unterschiedliche Hubplattformen mit der Hubvorrichtung verbinden, wobei das Trägerfahrzeug die unterschiedlichen Hubplattformen aus eigener Kraft und über die Fernsteuerung gesteuert anfahren kann.

In einer vorteilhaften Weiterbildung der Erfindung weist die Hubplattform eine im Wesentlichen geschlossene Kabine auf. Die Kabine weist weiterhin vorteilhaft eine Rampe auf, die zur einfachen Beladung der Kabine dient. In der Kabine können Passagiere, Gepäck und/oder Logistikmaterial bequem und komfortabel untergebracht werden und über die Rampe sicher ein- und ausgeladen werden.

In einer Weiterbildung der Erfindung weist die Hubplattform Vorrichtungen zur Aufnahme und/oder dem Transport von Transportbehältern, insbesondere Frachtcontainern, auf. Es ist vorteilhaft, wenn die Hubplattform weiterhin eine Fördervorrichtung, insbesondere ein Förderband, zum Transport von Transportbehältern, insbesondere von Frachtcontainern, aufweist. Auf diese Weise lassen sich Frachtcontainer mit dem erfindungsgemäßen Hub- und Transportfahrzeug von einem beliebigen Punkt aus, beispielsweise von einem Frachtterminal, transportieren und in ein Flugzeug laden. Das Flugzeug kann dann durch die Fördervorrichtung auch mit mehreren Frachtcontainern problemlos beladen werden, wobei an die üblicher Weise in Flugzeugen vorgesehenen Fördervorrichtungen angekoppelt werden kann.

Vorteilhaft ist es, die Hubplattform und/oder die Hubvorrichtung mit einer Vorrichtung zur Steuerung der Seitenneigung der Hubplattform auszustatten. Es ist weiterhin von Vorteil, das Trägerfahrzeug und/oder die Hubvorrichtung mit einer Vorrichtung zur Steuerung der Seitenneigung des Trägerfahrzeugs auszurüsten. Die Hubplattform kann so in einer gewünschten Lage, insbesondere vollkommen waagerecht, gehalten werden. Dies ist besonders beim Betrieb mit Passagieren von Vorteil, um diesen einen hohen Komfort und ein hohes Sicherheitsgefühl bieten zu können. Ein Ausgleich der Seitenneigung des Trägerfahrzeugs dient zur Erhöhung der Standfestigkeit. Das Hub- und Transportfahrzeug steht und fährt durch die vorgesehenen Steuervorrichtungen auch bei hohen Windgeschwindigkeiten und/oder bei auftretendem Propeller- und/oder Strahltriebwerksdruck vorbeifahrender anderer Flugzeuge auch in der ausgefahrenen Position sicher.

Vorteilhaft ist, wenn das Trägerfahrzeug im Wesentlichen ein Seitengabelstapler ist. Es ist weiterhin von Vorteil, die Hubvorrichtung hydraulisch zu betätigen. Durch diese Verwendung von Standardkomponenten lässt sich eine kostengünstige Fertigung der erfindungsgemäßen Hub- und Transportvorrichtung erreichen.

Es ist von Vorteil, wenn die Hubvorrichtung zusätzlich in einer Ebene des Trägerfahrzeugs im Wesentlichen senkrecht zur Fahrtrichtung bewegbar ist. Dadurch können angehobene Lasten, insbesondere die Hubplattform, den jeweiligen Erfordernissen der Standsicherheit angepasst über dem Trägerfahrzeug positioniert werden.

In einer Weiterbildung der Erfindung ist an der Hubplattform mindestens ein Tank zur Aufnahme versprühbarer Flüssigkeiten, insbesondere eines Komponentengemisches und eines Enteisungsmittels oder eine Reinigungsflüssigkeit, und mindestens eine Sprühvorrichtung zum Versprühen von Flüssigkeiten, insbesondere auch von Enteisungsflüssigkeit und/oder Reinigungsflüssigkeiten angeordnet. Damit kann das erfindungsgemäße Hub- und Transportfahrzeug zur Flugzeugenteisung und Flugzeugreinigung eingesetzt werden.

Bei einem Einsatz zur Flugzeugenteisung und zur Flugzeugreinigung ist vorteilhaft an der Hubplattform eine Hubarbeitsbühne zur Aufnahme mindestens einer Person vorgesehen, an der die Sprühvorrichtung angeordnet ist. Die Hubarbeitsbühne kann dabei über einen Hubarm an der Hubplattform angebunden sein, so dass der jeweilige Fahrer von der Hubarbeitsbühne aus die erforderliche Arbeitshöhe erreichen kann und die Enteisung oder die Reinigung vorschriftsmäßig durchführen kann.

In einer vorteilhaften Weiterbildung der Erfindung ist eine Steuervorrichtung zur Steuerung des Trägerfahrzeugs und/oder der Hubvorrichtung an der Hubarbeitsbühne vorgesehen. Damit ist der Fahrer in der Lage, sowohl das Fahrzeug als auch die Enteisungsvorrichtung zu bedienen. Der gesamte Enteisungsvorgang mit diesem Fahrzeug kann also von nur einer einzigen Person effizient durchgeführt werden.

Zum besseren Schutz der Komponenten und/oder zur Erhöhung des Komforts für den Fahrer kann eine im Wesentlichen geschlossene Kabine auf der Hubplattform und/der auf der Hubarbeitsbühne vorgesehen sein.

In einer weiteren Ausführungsform eines für die Flugzeugenteisung einsetzbaren Hub- und Transportfahrzeugs ist mindestens eine Schaltvorrichtung zwischen mindestens zwei Tanks und der Sprühvorrichtung vorgesehen, die die Sprühvorrichtung derart mit den Tanks verbindet, dass zu jedem Zeitpunkt höchstens ein einziger Tank mit der Sprühvorrichtung in Verbindung steht. Durch den Verzicht auf eine aufwändige Mischvorrichtung und den Einsatz einer einfachen Schaltvorrichtung zur Umschaltung der Flüssigkeitszufuhr zu der Sprühvorrichtung zwischen den einzelnen Tanks können in jedem der Fahrzeuge wesentliche Teile und damit Kosten eingespart werden.

In einer vorteilhaften Ausgestaltung der Erfindung ist mindestens eine Pumpvorrichtung zum Pumpen der zu versprühenden Flüssigkeiten zwischen mindestens einem Tank und der Sprühvorrichtung angeordnet. Dabei wird in einer Weiterbildung mindestens ein Tank zur Aufnahme eines Enteisungsmittels und mindestens ein weiterer Tank zur Aufnahme eines Komponentengemisches, insbesondere aus Wasser und einem Enteisungsmittel, vorgesehen. Es ist von Vorteil, mindestens eine Heizeinrichtung zur Temperierung mindestens einen Tanks vorzusehen. Weiterhin vorteilhaft ist es, mindestens einen der Tanks thermisch zu isolieren. Durch diese Ausführungsformen ist es möglich, einen kostengünstigen Aufbau für ein Fahrzeug herzustellen, der mit einem verminderten technischen Aufwand eine mit herkömmlichen Sprühfahrzeugen vergleichbaren Funktionalität erreicht. Durch die Temperierung des Komponentengemisches kann das Fahrzeug auch bei längeren Standzeiten oder niedrigen Flugzeugabfertigungsintervallen die gewünschte Temperatur des Komponentengemisches beibehalten. Durch die Tankisolierung ist eine Heizung des Komponentengemischs nur bei langen Standzeiten notwendig, hierdurch werden weitere Betriebskosten eingespart.

Die Aufgabe der Erfindung wird weiterhin durch eine Hubplattform mit den Merkmalen des Anspruchs 27 gelöst. Vorteilhafte Ausgestaltungen der Hubplattform sind in den von diesem Anspruch abhängigen Unteransprüchen angegeben.

Demgemäss ist die Hubplattform lösbar mit einem Trägerfahrzeug verbindbar. Die Hubplattform kann dabei vorteilhaft mit einem der vorbeschriebenen Hub- Und Transportfahrzeuge eingesetzt werden.

Die Hubplattform kann eine Steuereinrichtung aufweisen, die zur Steuerung eines Trägerfahrzeugs dient. Damit kann die Steuervorrichtung an einer der Funktionalität der jeweiligen Hubplattform günstigen Position angeordnet werden. Zum Schutz des Fahrers, der Passagiere, der Güter und/oder der auf der Hubplattform angebrachten Technik kann die Hubplattform eine im Wesentlichen geschlossene Kabine aufweisen. Um Güter oder Passagiere einfach laden zu können kann an der Kabine eine Rampe zur vereinfachten Beladung der Kabine vorgesehen sein.

Bei einem Einsatz der Hubplattform zum Gütertransport ist es von Vorteil, die Hubplattform mit Vorrichtungen zur Aufnahme und/oder dem Transport von Transportbehältern, insbesondere Frachtcontainern, zu versehen. Vereinfachtes Be- und Entladen kann dabei durch eine auf der Hubplattform angebrachte Fördervorrichtung, insbesondere einem Förderband, zum Transport von Transportbehältern, insbesondere von Frachtcontainern, bereit gestellt werden.

In einer Ausführungsform der Hubplattform als Enteisungsmodul sind an der Hubplattform mindestens zwei Tanks zur Aufnahme versprühbarer Flüssigkeiten, insbesondere eines Komponentengemisches und eines Enteisungsmittels oder einer Reinigungsflüssigkeit, und mindestens eine Sprühvorrichtung zum Versprühen der versprühbaren Flüssigkeiten angeordnet. Um die richtige Arbeitshöhe zur Enteisung flexibel erreichen zu können, kann an der Hubplattform eine Hubarbeitsbühne zur Aufnahme mindestens einer Person vorgesehen sein, an der die Sprühvorrichtung angeordnet ist. Die Hubarbeitsbühne ist dann vorteilhaft über einen Hubarm an der Hubplattform angebunden.

Um ein frühzeitiges Ermüden des Fahrers zu vermeiden und die Technik zu schützen kann die Hubplattform und/oder die Hubarbeitsbühne eine im Wesentlichen geschlossene Kabine aufweisen.

Ein einfacher und zuverlässiger Aufbau der verwendeten Enteisungstechnik lässt sich durch das bereits weiter oben beschriebene Enteisungsmodul auf der Plattform aufbringen. Insbesondere die Verwendung des beschriebenen Umschalters zwischen mindestens zwei Tanks und der Sprühvorrichtung bringt einen besonders einfachen Aufbau mit sich.

Die wesentlichen Merkmale der Erfindung werden nun anhand der in den Zeichnungen dargestellten Ausführungsbeispiele näher erläutert. Es zeigen:
- Figur 1: eine perspektivische Ansicht des erfindungsgemäßen Hub- und Transportfahrzeugs in einer Position mit ausgefahrener Hubplattform beim Be- und Entladen eines Flugzeugs,
- Figur 2: perspektivische Ansicht des Hub- und Transportfahrzeugs aus Figur 1 in einer Position mit neben dem Trägerfahrzeug abgesenkter Hubplattform beim Aufnehmen von Passagieren,
- Figur 3: das erfindungsgemäße Hub- und Transportfahrzeug der vorhergehenden Figuren in einer Fahrposition,
- Figur 4: schematischen Darstellung des erfindungsgemäßen Hub- und Transportfahrzeugs der vorhergehenden Figuren,
- Figur 5: schematische Darstellung eines erfindungsgemäßen Hub- und Transportfahrzeugs in einer weiteren Ausführungsform zur Aufnahme von Frachtcontainern,
- Figur 6: schematische Darstellung des Wechsels der Hubplattform,
- Figur 7: schematische Darstellung eines erfindungsgemäßen Hub- und Transportfahrzeugs mit einer auf einer Hubplattform vorgesehenen Sprühvorrichtung zum Aufbringen von Enteisungsmittel und anderen Flüssigkeiten beispielsweise auf Flugzuge in einer angehobenen Position der Hubplattform,
- Figur 8: Vorderansicht des Hub- und Transportfahrzeuges der Figur 7 in einer abgesenkten und einer Fahrposition.

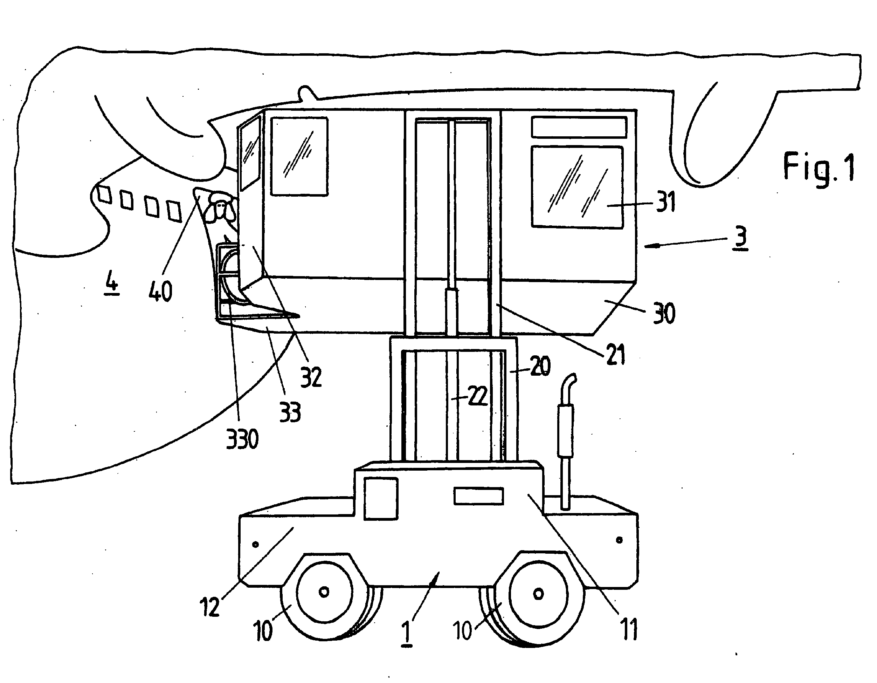

In Figur 1 ist das erfindungsgemäße Hub- und Transportfahrzeug zum Be- und Entladen von Flugzeugen abgebildet. Das Hub- und Transportfahrzeug weist ein Trägerfahrzeug 1 auf, das mit Rädern 10 versehen ist, die durch einen Motor 11 angetrieben werden. Zumindest zwei der Räder 10 sind lenkbar, so dass das Trägerfahrzeug in der Art eines üblichen Räderfahrzeuges steuerbar ist.

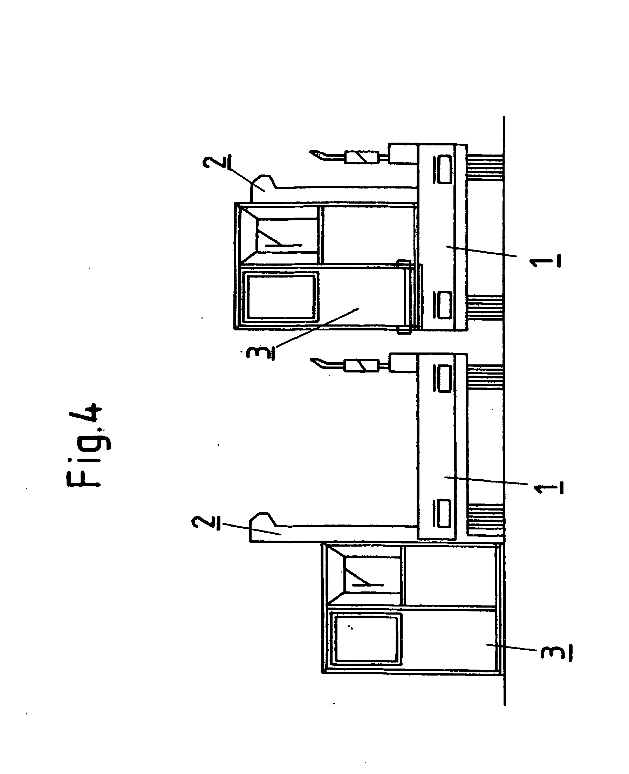

An dem Trägerfahrzeug 1 ist eine Hubvorrichtung 2 angebracht. Die Hubvorrichtung 2 besteht aus einem ersten Hubrahmen 20 und einem zweiten Hubrahmen 21, wobei der zweite Hubrahmen 21 in dem ersten Hubrahmen geführt wird. Die Hubvorrichtung wird durch eine Hydraulik 22 bewegt und die beiden Hubrahmen 20, 21 gegeneinander bewegt. Die Hubrahmen 20, 21 können auch teleskopisch ausgelegt sein und aus einer Vielzahl von Elementen bestehen. Die Hubvorrichtung 2 ist senkrecht zur Fahrtrichtung und in der Ebene des Trägerfahrzeugs 1 verschiebbar, wie in den weiter unten beschriebenen Figuren 4, 5 und 6 klar zu erkennen ist. Die Verschiebung der Hubvorrichtung 2 auf dem Trägerfahrzeug 1 kann ebenfalls durch einen hydraulischen Antrieb erfolgen. Durch diese Verschiebbarkeit der Hubvorrichtung 2 können die Lasten, insbesondere die Hubplattform, optimal über dem Trägerfahrzeug positioniert werden, so dass bei einem Anheben der Last eine hohe Standsicherheit des Trägerfahrzeugs 1 gewährleistet ist.

Die Verschiebung der Position der Hubvorrichtung 2 kann auch zum Ausgleich des auf die Kabine 3 und die Hubvorrichtung 2 selbst wirkenden Winddrucks und/oder des Drucks des Antriebsstrahls vorbeifahrender anderer Flugzeuge verwendet werden.

Auch hierdurch wird die Standsicherheit des Hub- und Transportfahrzeugs weiter verbessert. Der Ausgleich des Winddrucks kann aber auch über andere Maßnahmen, wie beispielsweise unterschiedliche Abstimmung der Härte einer Radfederung des Trägerfahrzeugs und/oder durch einen variablen Neigungswinkel der Hubvorrichtung gegen die Vertikale. Der Ausgleich wird über eine Steuervorrichtung, die Informationen von Neigungssensoren auswertet, durchgeführt.

Mit dem zweiten Hubrahmen 21 der Hubvorrichtung 2 ist eine Kabine 3 über einen hier nicht gezeigten Schnellverschluss verbunden. Die Kabine 3 dient zur Aufnahme der zu hebenden Lasten, wobei der Boden der Kabine 3 die eigentliche Hubplattform 30 ausbildet. Die Kabine 3 ist mit Fenstern 31 und mit einer Fahrerkabine 32 versehen, in der ein Fahrer alle notwendigen Bedienelemente zum Fahren des Trägerfahrzeugs 1 und zur Betätigung der Hubvorrichtung 2 vorfindet. Zum einfachen Be- und Entladen der Kabine 3 ist zusätzlich eine Rampe 33 vorgesehen, über die Fracht und/oder Passagiere einfach in das Innere der Kabine 3 hinein und auch wieder aus dieser heraus befördert werden können. Die Rampe 33 dient auch zum Andocken der Kabine 3 an ein Flugzeug, insbesondere im Bereich einer Einstiegsöffnung 40 eines Flugzeugs 4.

In der in Figur 1 gezeigten Stellung der erfindungsgemäßen Vorrichtung ist die Kabine 3 mittels der Hubvorrichtung 2 auf eine Höhe angehoben, in der Passagiere über die Rampe 33 durch eine Tür 40 eines Flugzeuges 4 gelangen können. Die Rampe 33 schließt dabei mit der Außenhaut des Flugzeugs 4 ab.

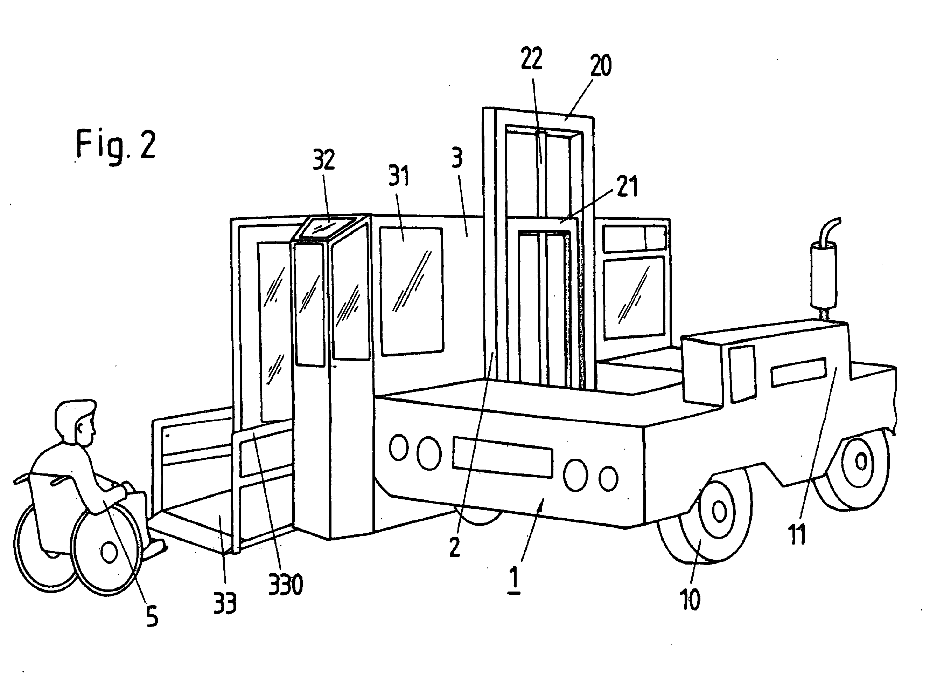

In Figur 2 ist das erfindungsgemäße Hub- und Transportfahrzeug in einer Position gezeigt, in der die Kabine 3 an der Hubvorrichtung 2 neben dem Trägerfahrzeug 1 auf den Boden abgelassen ist. In dieser Position kann ein Passagier 5, insbesondere ein behinderter Passagier, über die Rampe 33 einfach in die Kabine 3 gelangen. Zur Erleichterung des Einstiegs in die Kabine 3 und auch zum sicheren Einstieg in das Flugzeug 4 ist zusätzlich an der Rampe 33 eine Reling 330 angebracht. In Figur 2 ist deutlich die Fahrerkabine 32 zu sehen, die an der Kabine 3 angebracht ist. Von der Fahrerkabine 32 aus lässt sich zum einen die Hubvorrichtung 2 und zum anderen das Trägerfahrzeug 1 steuern.

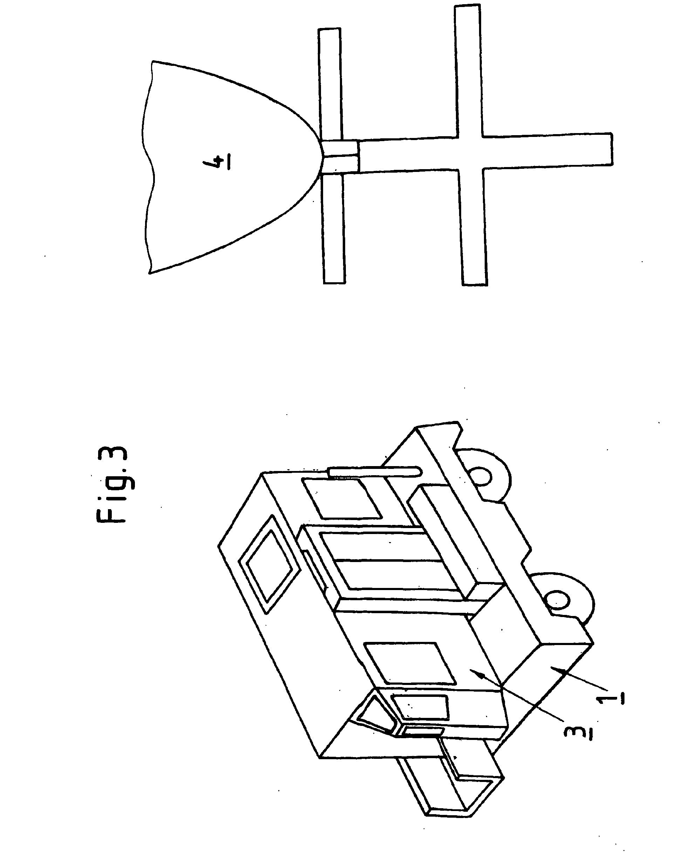

In Figur 3 ist das erfindungsgemäße Hub- und Transportfahrzeug in einer Position gezeigt, in der längere Strecken fahrend überwunden werden können. Die Kabine 3 befindet sich dabei mittig auf dem Trägerfahrzeug 1. Die Hubvorrichtung 2, die sich in Figur 2 noch an einer Seite des Trägerfahrzeugs 1 befand, ist in der Zwischenzeit durch die senkrecht zur Fahrtrichtung mögliche Verschiebung der Hubvorrichtung 2 auf die andere Seite des Trägerfahrzeuges 1 gezogen worden. Diese Verstellung der Hubvorrichtung 2 kann beispielsweise auch hydraulisch erfolgen. In der in Figur 3 gezeigten Fahrstellung ist das Hub- und Transportfahrzeug kompakt und lässt sich wie ein übliches rädergesteuertes Fahrzeug steuern. In dieser Stellung ist das Hub- und Transportfahrzeug zum Transfer, beispielsweise zwischen einem Terminal und einem Flugzeug 4, vorgesehen.

In Figur 4 ist noch einmal schematisch der Vorgang des Absenkens der Kabine 3 neben dem Trägerfahrzeug 1 und das des Aufnehmens der Kabine 3 gezeigt. In dem linken Bild der Figur 4 ist die Kabine 3 an der Hubvorrichtung 2 von dem Trägerfahrzeug 1 auf den Boden abgesetzt worden. Die Kabine 3 befindet sich dabei vollkommen außerhalb der durch die Reifen 10 definierten Begrenzung des Trägerfahrzeugs 1. Die Hubvorrichtung 2 befindet sich in dieser Position an einer äußeren Seite des Trägerfahrzeugs 1.

In dem in Figur 4 gezeigten rechten Bild ist die Kabine 3 auf dem Trägerfahrzeug 1 aufgesetzt. Die Hubvorrichtung 2 ist in Richtung der anderen Seite des Trägerfahrzeugs 1 verschoben worden, so dass die Kabine 3 sich nun vollkommen innerhalb der durch die Reifen 10 definierte Begrenzung des Trägerfahrzeugs 1 befindet. Die gezeigte erste Position entspricht einer Beladungs-Position für die Kabine 3. Die zweite Position entspricht einer Fahrstellung für das Hub- und Transportfahrzeug. Aus dieser Fahrstellung heraus kann die Kabine 3 direkt zum Ankoppeln an ein Flugzeug 4 durch die Hubvorrichtung 2 angehoben werden. Dies ist auch während der Fahrt des Trägerfahrzeugs 1 möglich.

Da sich die Kabine 3 beim Anheben in dieser Position im wesentlichen innerhalb des durch die vier Räder 10 gebildeten Rahmens des Trägerfahrzeugs 1 befindet, ist ein Anheben oder Absenken der Kabine 3 ohne zusätzliches Abstützen des Trägerfahrzeugs 1 möglich. Es ist daher auch ein Verfahren des Trägerfahrzeugs 1 bei angehobener Position der Kabine 3 möglich.

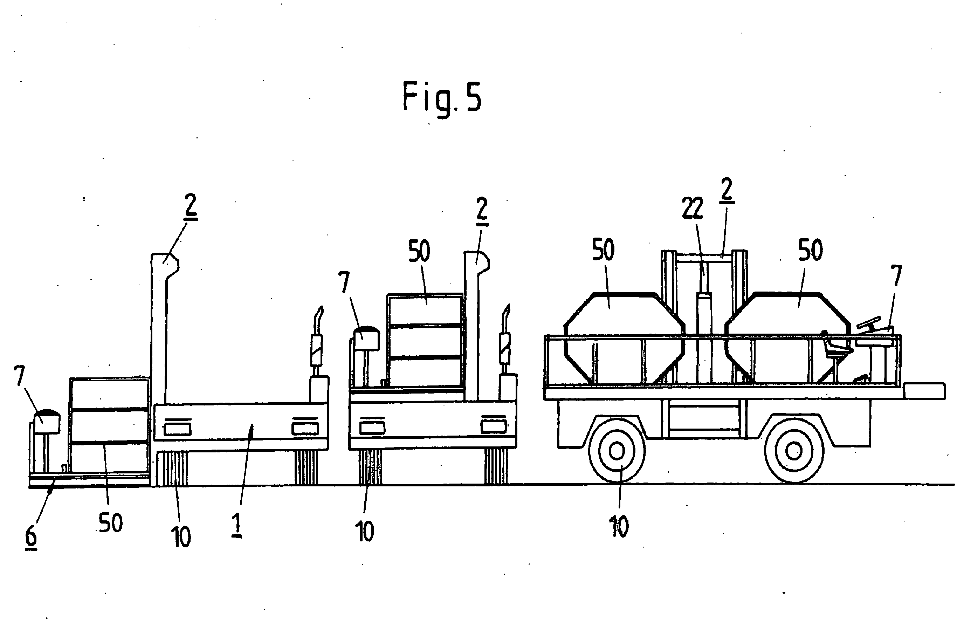

In Figur 5 ist eine weitere Ausführungsform des erfindungsgemäßen Hub- und Transportfahrzeugs gezeigt. In dieser Ausführungsform ist wiederum ein Trägerfahrzeug 1 mit Rädern 10 und einer daran vorgesehenen Hubvorrichtung 2 gezeigt. Die Hubvorrichtung 2 ist diesmal mit einer Hubplattform 6 verbunden, auf der eine Steuervorrichtung 7 vorgesehen ist. Die Hubplattform 6 dient zum Transport von Frachtcontainern 50. Auf der linken Abbildung der Figur 5 ist das Hub- und Transportfahrzeug in einer Position gezeigt, in der die Frachtcontainer 50 einfach auf die Hubplattform 6 aufgeladen werden können, in dem sie beispielsweise auf diese aufgeschoben werden.

Die Hubplattform 6 kann mit einem hier nicht gezeigten, üblichen Förderband versehen sein, so dass die Frachtcontainer 50 auf die Hubplattform 6 aufgefahren werden können. Das Förderband kann dann an eine sich im Flugzeug befindliche Fördereinrichtung angekoppelt werden.

Das mittlere Bild der Figur 5 zeigt das Hub- und Transportfahrzeug in einer Fahrposition. Die Container 50 können so einfach beispielsweise von einem Frachtterminal zu einem Flugzeug transportiert werden. Beim Erreichen des Flugzeuges wird dann über die Hubvorrichtung 2 die Hubplattform 6 angehoben und die Container 50 können über die Fördervorrichtung in das Flugzeug eingeladen werden. Auch hier ist die Steuervorrichtung 7 für das Trägerfahrzeug 1 und die Hubvorrichtung 2 mit auf der Hubplattform 6 angebracht. Der Fahrer des erfindungsgemäßen Hub- und Transportfahrzeugs sitzt immer auf der Höhe der Hubplattform 6 und hat daher einen optimalen Überblick über die zu steuernden Teile des Fahrzeugs. In dem rechten Bild der Figur 5 ist das Hub- und Transportfahrzeug in einer Seitenansicht nochmals in einer Fahrposition gezeigt.

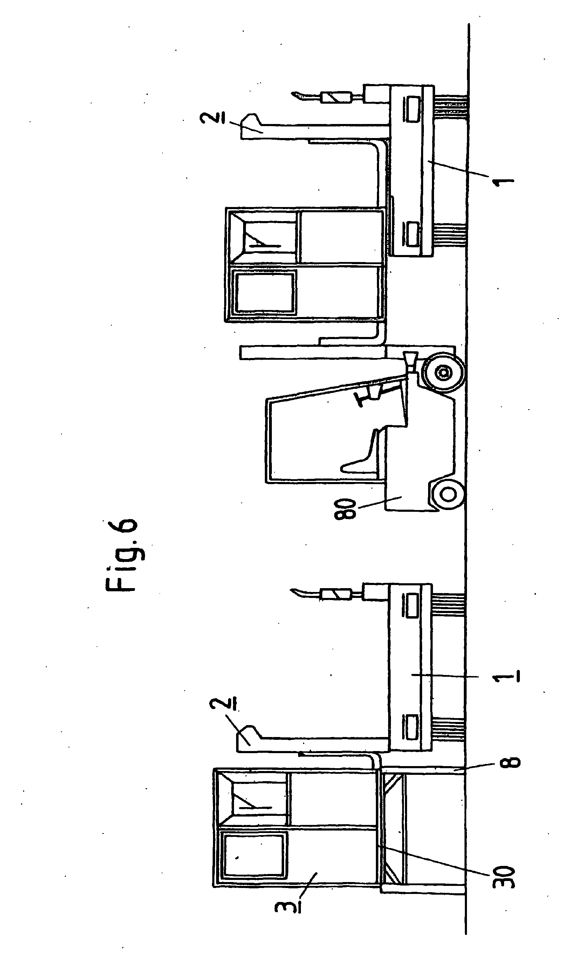

Figur 6 zeigt schematisch den Wechsel von unterschiedlichen Hubplattformen 30. Zur Verwendung im Flughafenbetrieb kann das Trägerfahrzeug 1 mit der Hubvorrichtung 2 mit unterschiedlichen Hubvorrichtungen 30, 6 verwendete werden.

In dem linken Bild der Figur 6 ist ein eigenständiger Wechsel der Kabine 3 gezeigt. Die Kabine 3 wird dabei von dem Hub- und Transportfahrzeug auf Stelzen 8 abgestellt und das Trägerfahrzeug 1 dann von der Kabine 3 entkoppelt. Um eine weitere Kabine oder eine andere Hubplattform aufnehmen zu können, wird das Trägerfahrzeug 1 nun über eine hier nicht dargestellte Fernbedienung zu der nächsten Kabine oder der nächsten Hubplattform gefahren. Dabei ist es vorteilhaft, die Geschwindigkeit in dieser ferngesteuerten Betriebsart zu beschränken, um einen sicheren Betrieb des Trägerfahrzeugs 1 zu gewährleisten.

Die Verbindung der jeweiligen Hubplattform 3, 6 mit der Hubvorrichtung 2 des Trägerfahrzeugs 1 erfolgt über einen Schnellverschluss. Ein umständliches Befestigen der Kabine 3 ist so nicht notwendig. Das rechte Bild der Figur 6 zeigt einen Wechsel der Kabine 3 mit Hilfe eines Gabelstaplers 80. Die Kabine 3 wird dabei von dem Trägerfahrzeug 1 mit dem Gabelstapler 80 abgehoben und kann an einer anderen Stelle abgesetzt werden. Die auszutauschende Hubplattform kann nun von dem Gabelstapler auf dem Trägerfahrzeug 1 aufgesetzt werden und mit der Hubvorrichtung 2 des Trägerfahrzeugs 1 verbunden werden.

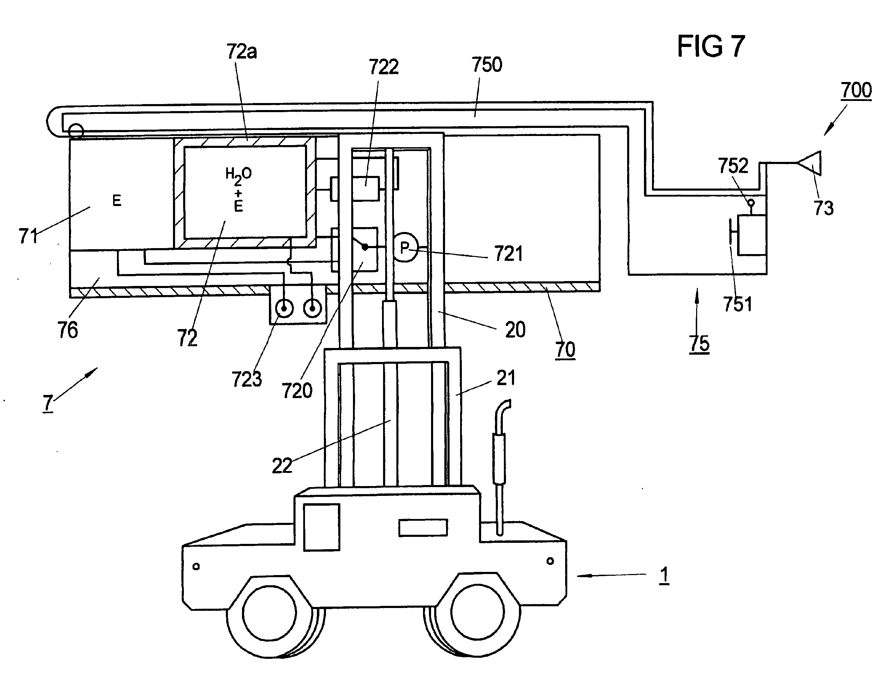

In Figur 7 ist eine schematische Seitenansicht eines erfindungsgemäßen Hub- und Trägerfahrzeugs 7 mit einem auf der Hubplattform 70 angeordneten Aufbau zum Aufbringen unterschiedlicher Flüssigkeiten auf Flugzeugteile dargestellt. Dieser Aufbau wird insbesondere zur Enteisung von Flugzeugteilen zur Startvorbereitung im Winter verwendet, kann aber auch zur Außenreinigung von Flugzeugen verwendet werden.

Das Fahrzeug 7 weist das bereits beschriebene Trägerfahrzeug 1 mit der ebenfalls beschriebenen Hubvorrichtung 2, 20, 21, 22 auf. An der Hubvorrichtung ist eine Hubplattform 70 angebracht, auf der eine mit einer Kabine 76 umschlossene Versorgungseinheit aufgebaut ist. In der Kabine 76 befinden sich zwei Tanks 71, 72, die zur Aufnahme zu versprühender Flüssigkeiten dienen. Der erste Tank 71 dient dabei zur Aufnahme reinen Enteisungsmittels E, vorzugsweise Enteisungsmittel vom Typ II. Der zweite Tank 72 dient zur Aufnahme eines vorgewärmten Komponentengemisches aus Wasser H₂O und Enteisungsmittel E. Der zweite Tank 72, der zur Aufnahme des vorgewärmten Komponentengemisches dient, weist eine thermische Isolierung 72a, die den Temperaturverlust des im Tank 72 gelagerten Komponentengemisches verringert und auch bei längeren Standzeiten des Fahrzeugs 7 kein zusätzliches Nachheizen notwendig macht.

In der Kabine 76 befindet sich weiterhin eine Umschaltvorrichtung 720, mit der zwischen den beiden Tanks 71, 72 alternativ hin- und hergeschaltet werden kann. Eine Pumpvorrichtung 721 saugt Flüssigkeit über Rohrleitungen daher je nach Stellung der Umschaltvorrichtung 720 entweder aus dem einen Tank 71 oder dem anderen Tank 72 an und drückt sie durch eine Druckleitung zu einer Sprühvorrichtung 700 mit einer Sprühlanze 73.

Auf der Hubplattform 70 weiterhin eine Hubarbeitsbühne 75 angeordnet, an dem die Sprühvorrichtung 700 angeordnet ist. Die Hubarbeitsbühne 75 ist dabei zur Aufnahme mindestens einer Person ausgelegt, die unter anderem die Sprühlanze 73 zur Enteisung von Flugzeugen bedient. An der Hubarbeitsbühne 75 ist weiterhin eine Bedienvorrichtung 752 angeordnet, mit der die Umschaltvorrichtung 720 fernbedient werden kann. Es ist weiterhin eine Steuervorrichtung 751 vorgesehen, mit der die die Sprühlanze 73 bedienende Person auch die Hubarbeitsbühne 75 und die Hubvorrichtung 2, 20, 21, 22 des Trägerfahrzeugs 1, sowie das Trägerfahrzeug 1 selbst, zumindest in Schrittgeschwindigkeit, steuern kann.

Zur Enteisung eines Flugzeuges wird das erfindungsgemäße Fahrzeug 7 zunächst im abgesenkten Zustand der Hubplattform 70 über einen Unterfluranschluss 723 mit reinem Enteisungsmittel in den Tank 71 und mit einem erhitzten Komponentengemisch aus Wasser und Enteisungsmittel in den Tank 72 von einer stationären Tankeinrichtung aus betankt. Das befüllte Fahrzeug 7 begibt sich nun zum Anfang der Startbahn auf die dort vorgesehene Enteisungsfläche. Hier werden die abzufertigenden Flugzeuge zunächst mit dem erhitzten Komponentengemisch aus Wasser und Enteisungsflüssigkeit aus dem Tank 72 besprüht, um Schneereste und Eisablagerungen von den Flugzeugaußenflächen, insbesondere von den Tragflächen, zu entfernen. Nachdem die Ablagerungen auf den Flugzeugflächen entfernt wurden, wird durch Fernbedienung der Umschaltvorrichtung 720 mittels der Bedienvorrichtung 752 auf den Tank 71, der reines Enteisungsmittel aufweist, umgeschaltet. In einem zweiten Arbeitsgang wird nun reines Enteisungsmittel auf die Flugzeugaußenflächen aufgetragen, die eine weitere Vereisung des Flugzeugs bis nach dem Startvorgang zuverlässig verhindern.

Der Bediener kann die Hubplattform 70 dabei zunächst über dem Trägerfahrzeug 1 bis zu einer zulässigen Höhe anheben und dann mittels Ausfahrens der Hubplattform 75 an dem Hubarm 750 die gewünschte Arbeitshöhe erreichen.

Durch die einfache Handhabung des Enteisungsvorganges, die nur aus dem Besprühen der Flugzeugaußenflächen und dem einfachen Umschalten zwischen den beiden Tanks besteht, sind Bedienfehler, die beispielsweise von einer fehlerhaften Wahl des Mischungsverhältnisses oder einer fehlerhaften Temperierung herrühren, ausgeschlossen. Weiterhin muss das Bedienpersonal nur die hier nicht dargestellten Füllstandsanzeigen der Tanks 71, 72 beachten, eine weitere Beobachtung der Witterung, der Temperaturen und des Mischungsverhältnisses ist nicht notwendig. Dadurch wird die Konzentration des die Sprühlanze 73 bedienenden Bedieners nicht durch weitere Tätigkeiten unterbrochen.

Um das erfindungsgemäße Fahrzeug 7 auch für längere Standzeiten und für niedrige Abfertigungsfrequenzen verwendbar zu machen, ist zusätzlich zu der Isolierung 72a des Tanks 72 eine Heizvorrichtung 722 vorgesehen, mit der ein auftretender Temperaturverlust der im Tank 72 befindlichen Enteisungsflüssigkeit ausgeglichen werden kann. In einer hier nicht dargestellten Ausführungsform wird auf diese Heizung verzichtet, da aufgrund der Isolierung 72a und der hohen Wärmekapazität der Flüssigkeit im Tank 72 ein hinreichend langsamer Abfall der Temperatur vorgegeben ist, der ein Nachheizen im Normalbetrieb nicht notwendig macht.

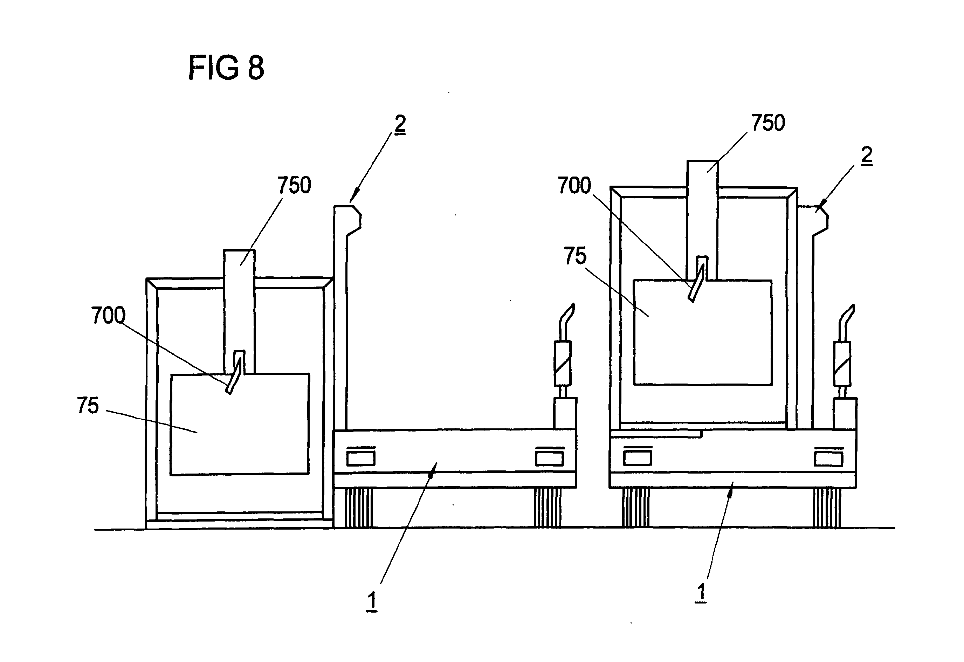

In Figur 8 ist das Hub- und Transportfahrzeug 7 in zwei unterschiedlichen Positionen der Hubplattform 70 relativ zum Trägerfahrzeug 1 gezeigt. In der linken Zeichnung ist ein Absetzen der Hubplattform 70 auf einer Seite des Trägerfahrzeugs 1 gezeigt. Auf der rechten Zeichnung befindet sich die Versorgungseinheit dagegen in einer Transportstellung, in der das Fahrzeug 7 beispielsweise von einem Tanklager zu seinem Einsatzort bewegt werden kann. Die Möglichkeit des Absetzens der Hubplattform 70 ermöglicht einen einfachen Zugang zu den einzelnen Baugruppen zur Wartung oder zur Befüllung.

Die Erfindung beschränkt sich nicht auf das vorliegende Ausführungsbeispiel. Wesentlich für die Erfindung ist allein, dass eine Hubplattform eines Hub- und Transportfahrzeugs zum Be- und Entladen von Flugzeugen in zumindest einem Hubbereich ihrer Hubvorrichtung in Fahrtrichtung links und/oder rechts neben ihrem Trägerfahrzeug abgesenkt und/oder angehoben werden kann.

## Patentansprüche

1. Hub- und Transportfahrzeug zum Lastentransport im Flughafenbereich mit einer an einem Trägerfahrzeug (1) angeordneten Hubvorrichtung (2, 20, 21, 22) und einer mit der Hubvorrichtung (2, 20, 21, 22) verbundenen Hubplattform (3, 6, 30, 70) zur Aufnahme von Lasten, insbesondere von Personen, Frachtgut, Containern, Enteisungsvorrichtungen und/oder Cateringmaterial, wobei die Hubplattform (3, 6, 30, 70) zum Ankoppeln an ein Flugzeug in einem ersten Hubbereich über dem Trägerfahrzeug (1) anhebbar ist und in zumindest einem weiteren Hubbereich der Hubvorrichtung (2, 20, 21, 22) abgesenkt und/oder angehoben werden kann, und wobei eine Steuervorrichtung (7, 751) zur Steuerung des Trägerfahrzeugs (1) und der Hubvorrichtung (2, 20, 21, 22) an der Hubplattform (3, 6, 30, 70) angeordnet ist
**dadurch gekennzeichnet,**
**dass** sich der weitere Hubbereich in Fahrtrichtung links und/oder rechts neben dem Trägerfahrzeug (1) befindet.

2. Hub- und Transportfahrzeug nach Anspruch 1, **dadurch gekennzeichnet, dass** die Hubplattform (3, 6, 30, 70) lösbar mit der Hubvorrichtung (2, 20, 21, 22) verbunden ist.

3. Hub- und Transportfahrzeug nach Anspruch 2, **dadurch gekennzeichnet, dass** die Hubplattform (3, 6, 30, 70) über einen Schnellverschluss mit der Hubvorrichtung (2, 20, 21, 22) lösbar verbunden ist.

4. Hub- und Transportfahrzeug nach einem der vorstehenden Ansprüche, **dadurch gekennzeichnet, dass** die Steuervorrichtung (7, 751) über einen Schnellverschluss, insbesondere über eine Steckverbindung, mit dem Trägerfahrzeug (1) koppelbar ist.

5. Hub- und Transportfahrzeug nach einem der vorstehenden Ansprüche, **dadurch gekennzeichnet, dass** das Trägerfahrzeug (1) über eine Fernsteuerung steuerbar ist.

6. Hub- und Transportfahrzeug nach Anspruch 5, **dadurch gekennzeichnet, dass** die Fernsteuerung über einen Schnellverschluss, insbesondere über eine Steckverbindung, mit dem Trägerfahrzeug (1) koppelbar ist.

7. Hub- und Transportfahrzeug nach einem der vorstehenden Ansprüche, **dadurch gekennzeichnet, dass** die Hubplattform (30, 70) eine im Wesentlichen geschlossene Kabine (3, 76) aufweist.

8. Hub- und Transportfahrzeug nach Anspruch 7, **dadurch gekennzeichnet, dass** an der Kabine (3) eine Rampe (33) zur vereinfachten Beladung der Kabine (3) vorgesehen ist.

9. Hub- und Transportfahrzeug nach einem der vorstehenden Ansprüche, **dadurch gekennzeichnet**, das die Hubplattform (6) Vorrichtungen zur Aufnahme und/oder dem Transport von Transportbehältern (50), insbesondere Frachtcontainern, aufweist.

10. Hub- und Transportfahrzeug nach Anspruch 9, **dadurch gekennzeichnet, dass** die Hubplattform (6) eine Fördervorrichtung, insbesondere ein Förderband, zum Transport von Transportbehältern (50), insbesondere von Frachtcontainern, aufweist.

11. Hub- und Transportfahrzeug nach einem der vorstehenden Ansprüche, **dadurch gekennzeichnet, dass** die Hubplattform (3, 6, 30, 70) und/oder die Hubvorrichtung (2, 20, 21, 22) eine Vorrichtung zur Steuerung der Seitenneigung der Hubplattform (3, 6, 30, 70) aufweist.

12. Hub- und Transportfahrzeug nach einem der vorstehenden Ansprüche, **dadurch gekennzeichnet, dass** das Trägerfahrzeug (1) und/oder die Hubvorrichtung (2, 20, 21, 22) eine Vorrichtung zur Steuerung der Seitenneigung des Trägerfahrzeugs (1) aufweist.

13. Hub- und Transportfahrzeug nach einem der vorstehenden Ansprüche, **dadurch gekennzeichnet, dass** das Trägerfahrzeug (1) im Wesentlichen ein Seitengabelstapler ist.

14. Hub- und Transportfahrzeug nach einem der vorstehenden Ansprüche, **dadurch gekennzeichnet, dass** die Hubvorrichtung (2, 20, 21, 22) hydraulisch betätigt wird.

15. Hub- und Transportfahrzeug nach einem der vorstehenden Ansprüche, **dadurch gekennzeichnet, dass** die Hubvorrichtung (2) zusätzlich in einer Ebene des Trägerfahrzeugs (1) im Wesentlichen senkrecht zur Fahrtrichtung bewegbar ist.

16. Hub- und Transportsfahrzeug nach einem der vorstehenden Ansprüche, **dadurch gekennzeichnet, dass** an der Hubplattform (70) mindestens ein Tank (71, 72) zur Aufnahme versprühbarer Flüssigkeiten, insbesondere eines Komponentengemisches und eines Enteisungsmittels oder einer Reinigungsflüssigkeit, und mindestens eine Sprühvorrichtung (700) zum Versprühen der versprühbaren Flüssigkeiten angeordnet sind.

17. Hub- und Transportsfahrzeug nach Anspruch 16, **dadurch gekennzeichnet, dass** an der Hubplattform (70) eine Hubarbeitsbühne (75) zur Aufnahme mindestens einer Person vorgesehen ist, wobei die Sprühvorrichtung (700) an der Hubarbeitsbühne (75) angeordnet ist.

18. Hub- und Transportfahrzeug nach Anspruch 17, **dadurch gekennzeichnet, dass** die Hubarbeitsbühne (75) über einen Hubarm (750) an der Hubplattform (70) angebunden ist.

19. Hub- und Transportfahrzeug nach einem der Ansprüche 16 bis 18, **dadurch gekennzeichnet, dass** eine Steuervorrichtung (751) zur Steuerung des Trägerfahrzeugs (1) und/oder der Hubvorrichtung (2, 20, 21, 22) an der Hubarbeitsbühne (75) derart vorgesehen ist, dass eine Person das Trägerfahrzeug (1) von der Hubarbeitsbühne (75) aus steuern kann.

20. Hub- und Transportfahrzeug nach einem der Ansprüche 16 bis 19, **dadurch gekennzeichnet, dass** die Hubplattform (70) und/oder die Hubarbeitsbühne (75) eine im Wesentlichen geschlossene Kabine (76) aufweist.

21. Hub- und Transportfahrzeug nach einem der Ansprüche 16 bis 20, **dadurch gekennzeichnet, dass** eine Schaltvorrichtung (720) zwischen mindestens zwei Tanks (71, 72) und der Sprühvorrichtung (700) vorgesehen ist, die die Sprühvorrichtung (700) derart mit den Tanks (71, 72) verbindet, dass zu jedem Zeitpunkt höchstens ein einziger Tank (71, 72) mit der Sprühvorrichtung (700) in Verbindung steht.

22. Hub- und Transportfahrzeug nach einem der Ansprüche 16 bis 21, **dadurch gekennzeichnet, dass** mindestens eine Pumpvorrichtung (721) zum Pumpen der zu versprühenden Flüssigkeiten (E, E+H₂O) zwischen mindestens einem Tank (71, 72) und der Sprühvorrichtung (700) angeordnet ist.

23. Hub- und Transportfahrzeug nach einem der Ansprüche 16 bis 22, **dadurch gekennzeichnet, dass** mindestens ein Tank (71) zur Aufnahme eines Enteisungsmittels (E) und mindestens ein weiterer Tank (72) zur Aufnahme eines Komponentengemisches (E+H₂O), insbesondere aus Wasser und einem Enteisungsmittel, dient.

24. Hub- und Transportfahrzeug nach einem der Ansprüche 16 bis 23, **dadurch gekennzeichnet, dass** mindestens eine Heizeinrichtung (722) zur Temperierung mindestens eines Tanks (72) und/oder des Tankinhaltes (H₂O + E) vorgesehen ist.

25. Hub- und Transportfahrzeug nach einem der Ansprüche 16 bis 24, **dadurch gekennzeichnet, dass** mindestens ein Tank (72) thermisch isoliert ist.

26. Hubplattform mit einem Hub- und Trägerfahrzeug gemäß einem der vorstehenden Ansprüche, wobei die Hubplattform lösbar mit einem Trägerfahrzeug verbindbar ist, **dadurch gekennzeichnet, dass** eine Steuervorrichtung (7, 751) zur Steuerung eines Trägerfahrzeugs (1) an der Hubplattform (3, 6, 30, 70) angeordnet ist.

27. Hubplattform nach Anspruch 26, **dadurch gekennzeichnet, dass** die Hubplattform (30, 70) eine im Wesentlichen geschlossene Kabine (3, 76) aufweist.

28. Hubplattform nach Anspruch 27, **dadurch gekennzeichnet, dass** an der Kabine (3) eine Rampe (33) zur vereinfachten Beladung der Kabine (3) vorgesehen ist.

29. Hubplattform nach einem der Ansprüche 26 bis 28, **dadurch gekennzeichnet**, das die Hubplattform (6) Vorrichtungen zur Aufnahme und/oder dem Transport von Transportbehältern (50), insbesondere Frachtcontainern, aufweist.

30. Hubplattform nach Anspruch 29, **dadurch gekennzeichnet, dass** die Hubplattform (6) eine Fördervorrichtung, insbesondere ein Förderband, zum Transport von Transportbehältern (50), insbesondere von Frachtcontainern, aufweist.

31. Hubplattform nach einem der Ansprüche 26 bis 30, **dadurch gekennzeichnet, dass** an der Plattform (70) mindestens ein Tank (71, 72) zur Aufnahme versprühbarer Flüssigkeiten, insbesondere eines Komponentengemisches und eines Enteisungsmittels oder einer Reinigungsflüssigkeit, und mindestens eine Sprühvorrichtung (700) zum Versprühen der versprühbaren Flüssigkeiten angeordnet sind.

32. Hubplattform nach Anspruch 31, **dadurch gekennzeichnet, dass** an der Hubplattform (70) eine Hubarbeitsbühne (75) zur Aufnahme mindestens einer Person vorgesehen ist, an der die Sprühvorrichtung (700) angeordnet ist.

33. Hubplattform nach Anspruch 32, **dadurch gekennzeichnet, dass** die Hubarbeitsbühne (75) über einen Hubarm (750) an der Hubplattform (70) angebunden ist.

34. Hubplattform nach einem der Ansprüche 26 bis 33, **dadurch gekennzeichnet, dass** die Hubplattform (70) und/oder die Hubarbeitsbühne (75) eine im Wesentlichen geschlossene Kabine (76) aufweist.

35. Hubplattform nach einem der Ansprüche 31 bis 34, **dadurch gekennzeichnet, dass** eine Schaltvorrichtung (720) zwischen mindestens zwei Tanks (71, 72) und der Sprühvorrichtung (700) vorgesehen ist, die die Sprühvorrichtung (700) derart mit den Tanks (71, 72) verbindet, dass zu jedem Zeitpunkt höchstens ein einziger Tank (71, 72) mit der Sprühvorrichtung (700) in Verbindung steht.

36. Hubplattform nach einem der Ansprüche 31 bis 35, **dadurch gekennzeichnet, dass** mindestens eine Pumpvorrichtung (721) zum Pumpen der zu versprühenden Flüssigkeiten (E, E+H₂O) zwischen mindestens einem Tank (71, 72) und der Sprühvorrichtung (700) angeordnet ist.

37. Hubplattform nach einem der Ansprüche 31 bis 36, **dadurch gekennzeichnet, dass** mindestens ein Tank (71) zur Aufnahme eines Enteisungsmittels (E) und mindestens ein weiterer Tank (72) zur Aufnahme eines Komponentengemisches (E+H₂O), insbesondere aus Wasser und einem Enteisungsmittel, dient.

38. Hubplattform nach einem der Ansprüche 31 bis 37, **dadurch gekennzeichnet, dass** mindestens eine Heizeinrichtung (722) zur Temperierung mindestens eines Tanks (72) und/oder des Tankinhaltes (H₂O + E) vorgesehen ist.

39. Hubplattform nach einem der Ansprüche 31 bis 38, **dadurch gekennzeichnet, dass** mindestens ein Tank (72) thermisch isoliert ist.

## Claims

1. Lifting and transport vehicle for transporting loads in the airport sector, with a lifting apparatus (2, 20, 21, 22) arranged on a carrier vehicle (1) and a lifting platform (3, 6, 30, 70) attached to the lifting apparatus (2, 20, 21, 22) for carrying loads, particularly people, freight, containers, de-icing appliances and/or catering material, whereby the lifting platform (3, 6, 30, 70) can be lifted over the carrier vehicle (1) in a first lifting range for coupling to an aircraft and, in at least one further lifting range of the lifting apparatus (2, 20, 21, 22), can be lowered and/or lifted, and whereby a control device (7, 751) to control the carrier vehicle (1) and the lifting apparatus (2, 20, 21, 22) is arranged on the lifting platform (3, 6, 30, 70)
**characterised**
**in that** the further lifting range is located on the left and/or right in direction of travel beside the carrier vehicle (1).

2. Lifting and transport vehicle according to Claim 1, **characterised in that** the lifting platform (3, 6, 30, 70) is detachably connected to the lifting apparatus (2, 20, 21, 22).

3. Lifting and transport vehicle according to Claim 2, **characterised in that** the lifting platform (3, 6, 30, 70) is detachably connected to the lifting apparatus (2, 20, 21, 22) by means of a quick-release lock.

4. Lifting and transport vehicle according to one of the preceding Claims, **characterised in that** the control device (7, 751) can be coupled to the carrier vehicle (1) via a quick-release lock, particularly via a plug connector.

5. Lifting and transport vehicle according to one of the preceding Claims, **characterised in that** the carrier vehicle (1) can be operated via a remote control.

6. Lifting and transport vehicle according to Claim 5, **characterised in that** the remote control can be coupled to the carrier vehicle (1) via a quick-release lock, particularly via a plug connector.

7. Lifting and transport vehicle according to one of the preceding Claims, **characterised in that** the lifting platform (30, 70) has an essentially closed cabin (3, 76).

8. Lifting and transport vehicle according to Claim 7, **characterised in that** a ramp (33) is provided on the cabin (3) to facilitate loading of the cabin (3).

9. Lifting and transport vehicle according to one of the preceding Claims, **characterised in that** the lifting platform (6) has devices for holding and/or transporting transport containers (50), particularly freight containers.

10. Lifting and transport vehicle according to Claim 9, **characterised in that** the lifting platform (6) has a conveying apparatus, particularly a conveyor belt, for transporting transport containers (50), particularly freight containers.

11. Lifting and transport vehicle according to one of the preceding Claims, **characterised in that** the lifting platform (3, 6, 30, 70) and/or the lifting apparatus (2, 20, 21, 22) has a device for controlling the sideways slope of the lifting platform (3, 6, 30, 70).

12. Lifting and transport vehicle according to one of the preceding Claims, **characterised in that** the carrier vehicle (1) and/or the lifting apparatus (2, 20, 21, 22) has a device for controlling the sideways slope of the carrier vehicle (1).

13. Lifting and transport vehicle according to one of the preceding Claims, **characterised in that** the carrier vehicle (1) is essentially a side forklift stacker.

14. Lifting and transport vehicle according to one of the preceding Claims, **characterised in that** the lifting apparatus (2, 20, 21, 22) is hydraulically operated.

15. Lifting and transport vehicle according to one of the preceding Claims, **characterised in that** the lifting apparatus (2) can additionally be moved in a plane of the carrier vehicle (1) essentially perpendicular to the direction of travel.

16. Lifting and transport vehicle according to one of the preceding Claims, **characterised in that** at least one tank (71, 72) for holding sprayable fluids, particularly a compound mixture and a de-icing agent or cleaning fluid, and at least one spraying device (700) for spraying the sprayable fluids is arranged on the lifting platform (70).

17. Lifting and transport vehicle according to Claim 16, **characterised in that** a work platform (75) is provided on the lifting platform (70) to hold at least one person, the spraying device (700) being arranged on the work platform (75).

18. Lifting and transport vehicle according to Claim 17, **characterised in that** the work platform (75) is attached to the lifting platform (70) via a lifting arm (750).

19. Lifting and transport vehicle according to one of Claims 16 to 18, **characterised in that** a control device (751) is provided on the work platform (75) to control the carrier vehicle (1) and/or the lifting apparatus (2, 20, 21, 22), in such a way that a person can control the carrier vehicle (1) from the work platform (75).

20. Lifting and transport vehicle according to one of Claims 16 to 19, **characterised in that** the lifting platform (70) and/or the work platform (75) has an essentially closed cabin (76).

21. Lifting and transport vehicle according to one of Claims 16 to 20, **characterised in that** a switching device (720) is provided between at least two tanks (71, 72) and the spraying device (700), which connects the spraying device (700) with the tanks (71, 72) in such a way that only one tank (71, 72) is connected to the spraying device (700) at any one time.

22. Lifting and transport vehicle according to one of Claims 16 to 21, **characterised in that** at least one pumping device (721) for pumping the fluids to be sprayed (E, E+H₂O) is arranged between at least one tank (71, 72) and the spraying device (700).

23. Lifting and transport vehicle according to one of Claims 16 to 22, **characterised in that** at least one tank (71) serves to hold a de-icing agent (E) and at least one further tank (72) to hold a compound mixture (E+H₂O), particularly one consisting of water and a de-icing agent.

24. Lifting and transport vehicle according to one of Claims 16 to 23, **characterised in that** at least one heating device (722) is provided to preheat at least one tank (72) and/or the tank contents (H₂O + E).

25. Lifting and transport vehicle according to one of Claims 16 to 24, **characterised in that** at least one tank (72) is thermally insulated.

26. Lifting platform with a lifting and transport vehicle according to one of the preceding claims, whereby the lifting platform is detachably connectable to a carrier vehicle, **characterised in that** a control device (7, 751) for controlling a carrier vehicle (1) is arranged on the lifting platform (3, 6, 30, 70).

27. Lifting platform according to Claim 26, **characterised in that** the lifting platform (30, 70) has an essentially closed cabin (3, 76).

28. Lifting platform according to Claim 27, **characterised in that** a ramp (33) is provided on the cabin (3) to facilitate loading of the cabin (3).

29. Lifting and transport vehicle according to one of Claims 26 to 28, **characterised in that** the lifting platform (6) has devices for holding and/or transporting transport containers (50), particularly freight containers.

30. Lifting platform according to Claim 29, **characterised in that** the lifting platform (6) has a conveying apparatus, particularly a conveyor belt, for transporting transport containers (50), particularly freight containers.

31. Lifting platform according to one of Claims 26 to 30, **characterised in that** at least one tank (71, 72) for holding sprayable fluids, particularly a compound mixture and a de-icing agent or a cleaning fluid, and at least one spraying device (700) for spraying the sprayable fluids are arranged on the platform (70).

32. Lifting platform according to Claim 31, **characterised in that** a work platform (75) is provided on the lifting platform (70) to hold at least one person, on which the spraying device (700) is arranged.

33. Lifting platform according to Claim 32, **characterised in that** the work platform (75) is attached to the lifting platform (70) via a lifting arm (750).

34. Lifting platform according to one of Claims 26 to 33, **characterised in that** the lifting platform (70) and/or the work platform (75) has an essentially closed cabin (76).

35. Lifting platform according to one of Claims 31 to 34, **characterised in that** a switching device (720) is provided between at least two tanks (71, 72) and the spraying device (700), which connects the spraying device (700) with the tanks (71, 72) in such a way that only one tank (71, 72) is connected to the spraying device (700) at any one time.

36. Lifting platform according to one of Claims 31 to 35, **characterised in that** at least one pumping device (721) for pumping the fluids to be sprayed (E, E+H₂O) is arranged between at least one tank (71, 72) and the spraying device (700).

37. Lifting platform according to one of Claims 31 to 36, **characterised in that** at least one tank (71) serves to hold a de-icing agent (E) and at least one further tank (72) to hold a compound mixture (E+H₂O), particularly one consisting of water and a de-icing agent.

38. Lifting platform according to one of Claims 31 to 37, **characterised in that** at least one heating device (722) is provided to preheat at least one tank (72) and/or the tank contents (H₂O + E).

39. Lifting platform according to one of Claims 31 to 38, **characterised in that** at least one tank (72) is thermally insulated.

## Revendications

1. Véhicule de levage et de transport de charges dans les zones aéroportuaires avec un dispositif de levage (2, 20, 21, 22) disposé sur un véhicule porteur (1) et une plateforme de levage (3, 6, 30, 70) reliée au dispositif de levage (2, 20, 21, 22) pour recevoir des charges, en particulier des personnes, des marchandises, des conteneurs, des dispositifs de dégivrage et/ou du matériel de restauration, la plateforme de levage (3, 6, 30, 70) pouvant être levée dans une première zone de levage au-dessus du véhicule porteur (1) pour accoster un avion et pouvant être baissée et/ou soulevée au moins dans une autre zone de levage du dispositif de levage (2, 20, 21, 22), et un dispositif de commande (7, 751) étant disposé sur la plateforme de levage (3, 6, 30, 70) pour manoeuvrer le véhicule porteur (1) et le dispositif de levage (2, 20, 21, 22), **caractérisé en ce que** l'autre zone de levage se trouve à côté du véhicule porteur (1) à gauche et/ou à droite .

2. Véhicule de levage et de transport selon la revendication 1, **caractérisé en ce que** la plateforme de levage (3, 6, 30, 70) est reliée de manière amovible au dispositif de levage (2, 20, 21, 22).

3. Véhicule de levage et de transport selon la revendication 2, **caractérisé en ce que** la plateforme de levage (3, 6, 30, 70) est reliée de manière amovible au dispositif de levage (2, 20, 21, 22) au moyen d'une fermeture rapide.

4. Véhicule de levage et de transport selon l'une quelconque des revendications précédentes, **caractérisé en ce que** le dispositif de commande (7, 751) peut être couplé avec le véhicule porteur (1) au moyen d'une fermeture rapide, en particulier au moyen d'un raccordement enfichable.

5. Véhicule de levage et de transport selon l'une quelconque des revendications précédentes, **caractérisé en ce que** le véhicule porteur (1) est manoeuvrable à l'aide d'une télécommande.

6. Véhicule de levage et de transport selon la revendication 5, **caractérisé en ce que** la télécommande peut être couplée avec le véhicule porteur (1) au moyen d'une fermeture rapide, en particulier au moyen d'un raccordement enfichable.

7. Véhicule de levage et de transport selon l'une quelconque des revendications précédentes, **caractérisé en ce que** la plateforme de levage (30, 70) comporte une cabine (3, 76) essentiellement fermée.

8. Véhicule de levage et de transport selon la revendication 7, **caractérisé en ce qu'**une rampe (33) est prévue à la cabine (3) pour faciliter le chargement de la cabine (3).

9. Véhicule de levage et de transport selon l'une quelconque des revendications précédentes, **caractérisé en ce que** la plateforme de levage (6) comporte des dispositifs pour recevoir et/ou transporter des conteneurs (50), en particuliers des conteneurs de fret.

10. Véhicule de levage et de transport selon la revendication 9, **caractérisé en ce que** la plateforme de levage (6) comporte un dispositif transporteur, en particulier une bande transporteuse pour le transport de conteneurs (50), en particulier de conteneurs de fret.

11. Véhicule de levage et de transport selon l'une quelconque des revendications précédentes, **caractérisé en ce que** la plateforme de levage (3, 6, 30, 70) et/ou le dispositif de levage (2, 20, 21, 22) comporte un dispositif pour commander l'inclinaison latérale de la plateforme de levage (3, 6, 30, 70).

12. Véhicule de levage et de transport selon l'une quelconque des revendications précédentes, **caractérisé en ce que** le véhicule porteur (1) et/ou le dispositif de levage (2, 20, 21, 22) comporte un dispositif pour commander l'inclinaison latérale du véhicule porteur (1).

13. Véhicule de levage et de transport selon l'une quelconque des revendications précédentes, **caractérisé en ce que** le véhicule porteur (1) est essentiellement un chariot élévateur à fourche transversale.

14. Véhicule de levage et de transport selon l'une quelconque des revendications précédentes, **caractérisé en ce que** le dispositif de levage (2, 20, 21, 22) est actionné de manière hydraulique.

15. Véhicule de levage et de transport selon l'une quelconque des revendications précédentes, **caractérisé en ce qu'**en plus, dans un plan du véhicule porteur (1), le dispositif de levage (2) est mobile de manière essentiellement perpendiculaire au sens de la marche.

16. Véhicule de levage et de transport selon l'une quelconque des revendications précédentes, **caractérisé en ce qu'**au moins un réservoir (71, 72) pour recevoir des liquides pulvérisables, en particulier un mélange de composants et un produit de dégivrage ou un liquide nettoyant, et au moins un dispositif de pulvérisation (700) pour pulvériser les liquides pulvérisables sont disposés sur la plateforme de levage (70).

17. Véhicule de levage et de transport selon la revendication 16, **caractérisé en ce qu'**une plateforme de travail élévatrice (75) pour recevoir au moins une personne est prévue à la plateforme de levage (70), et dans lequel le dispositif de pulvérisation (700) est disposé sur la plateforme de travail élévatrice (75).

18. Véhicule de levage et de transport selon la revendication 17, **caractérisé en ce que** la plateforme de travail élévatrice (75) est attachée par le biais d'un bras de levage (750) à la plateforme de levage (70).

19. Véhicule de levage et de transport selon l'une quelconque des revendications 16 à 18, **caractérisé en ce qu'**un dispositif de commande (751) pour manoeuvrer le véhicule porteur (1) et/ou le dispositif de levage (2, 20, 21, 22) est prévu de telle manière à la plateforme de travail élévatrice (75) qu'une personne peut manoeuvrer le véhicule porteur (1) depuis la plateforme de travail élévatrice (75).

20. Véhicule de levage et de transport selon l'une quelconque des revendications 16 à 19, **caractérisé en ce que** la plateforme de levage (70) et/ou la plateforme de travail élévatrice (75) comporte une cabine (76) essentiellement fermée.

21. Véhicule de levage et de transport selon l'une quelconque des revendications 16 à 20, **caractérisé en ce qu'**entre au moins deux réservoirs (71, 72) et le dispositif de pulvérisation (700) est prévu un dispositif de commutation (720) qui relie le dispositif de pulvérisation (700) de telle façon aux réservoirs (71, 72) qu'à tout moment un seul réservoir (71, 72) tout au plus communique avec le dispositif de pulvérisation (700).

22. Véhicule de levage et de transport selon l'une quelconque des revendications 16 à 21, **caractérisé en ce qu'**au moins un dispositif de pompage (721) est disposé entre au moins un réservoir (71, 72) et le dispositif de pulvérisation (700) pour pomper les liquides à pulvériser (E, E+H₂O).

23. Véhicule de levage et de transport selon l'une quelconque des revendications 16 à 22, **caractérisé en ce qu'**au moins un réservoir (71) sert à recevoir un produit de dégivrage (E) et au moins un autre réservoir (72) sert à recevoir un mélange de composants (E+H₂O), en particulier constitué d'eau et de produit de dégivrage.

24. Véhicule de levage et de transport selon l'une quelconque des revendications 16 à 23, **caractérisé en ce qu'**au moins un dispositif de chauffage (722) est prévu pour équilibrer la température au moins d'un réservoir (72) et/ou du contenu du réservoir (H₂O + E).

25. Véhicule de levage et de transport selon l'une quelconque des revendications 16 à 24, **caractérisé en ce qu'**au moins un réservoir (72) est thermiquement isolé.

26. Plateforme de levage avec un véhicule de levage et porteur selon l'une quelconque des revendications précédentes, la plateforme de levage pouvant être reliée de manière amovible à un véhicule porteur, **caractérisée en ce qu'**un dispositif de commande (7, 751) est disposé sur la plateforme de levage (3, 6, 30, 70) pour manoeuvrer un véhicule porteur (1).

27. Plateforme de levage selon la revendication 26, **caractérisée en ce que** la plateforme de levage (30, 70) comporte une cabine (3, 76) essentiellement fermée.

28. Plateforme de levage selon la revendication 27, **caractérisée en ce qu'**une rampe (33) est prévue à la cabine (3) pour faciliter le chargement de la cabine (3).

29. Plateforme de levage selon l'une quelconque des revendications 26 à 28, **caractérisée en ce que** la plateforme de levage (6) comporte des dispositifs pour recevoir et/ou transporter des conteneurs (50), en particulier des conteneurs de fret.

30. Plateforme de levage selon la revendication 29, **caractérisée en ce que** la plateforme de levage (6) comporte un dispositif transporteur, en particulier une bande transporteuse pour le transport de conteneurs (50), en particulier de conteneurs de fret.

31. Plateforme de levage selon l'une quelconque des revendications 26 à 30, **caractérisée en ce qu'**au moins un réservoir (71, 72) pour recevoir les liquides pulvérisables, en particulier un mélange de composants et un produit de dégivrage ou un liquide nettoyant, et au moins un dispositif de pulvérisation (700) pour pulvériser les liquides pulvérisables sont disposés sur la plateforme (70).

32. Plateforme de levage selon la revendication 31, **caractérisée en ce qu'**à la plateforme de levage (70) est prévue une plateforme de travail élévatrice (75) destinée à recevoir au moins une personne, plateforme de travail élévatrice sur laquelle est disposé le dispositif de pulvérisation (700).

33. Plateforme de levage selon la revendication 32, **caractérisée en ce que** la plateforme de travail élévatrice (75) est attachée par le biais d'un bras de levage (750) à la plateforme de levage (70).

34. Plateforme de levage selon l'une quelconque des revendications 26 à 33, **caractérisée en ce que** la plateforme de levage (70) et/ou la plateforme de travail élévatrice (75) comporte une cabine (76) essentiellement fermée.

35. Plateforme de levage selon l'une quelconque des revendications 31 à 34, **caractérisée en ce qu'**entre au moins deux réservoirs (71, 72) et le dispositif de pulvérisation (700) est prévu un dispositif de commutation (720) qui relie le dispositif de pulvérisation (700) aux réservoirs (71, 72) de telle manière qu'à tout moment un seul réservoir (71, 72) tout au plus communique avec le dispositif de pulvérisation (700).

36. Plateforme de levage selon l'une quelconque des revendications 31 à 35, **caractérisée en ce qu'**au moins un dispositif de pompage (721) est disposé entre au moins un réservoir (71, 72) et le dispositif de pulvérisation (700) pour pomper les liquides à pulvériser (E, E+H₂O).

37. Plateforme de levage selon l'une quelconque des revendications 31 à 36, **caractérisée en ce qu'**au moins un réservoir (71) sert à recevoir un produit de dégivrage (E) et au moins un autre réservoir (72) sert à recevoir un mélange de composants (E+H₂O), en particulier constitué d'eau et de produit de dégivrage.

38. Plateforme de levage selon l'une quelconque des revendications 31 à 37, **caractérisée en ce qu'**au moins un dispositif de chauffage (722) est prévu pour équilibrer la température au moins d'un réservoir (72) et/ou du contenu du réservoir (H₂O + E).

39. Plateforme de levage selon l'une quelconque des revendications 31 à 38, **caractérisée en ce qu'**au moins un réservoir (72) est thermiquement isolé.
